# EUROPÄISCHE PATENTSCHRIFT

(11) **EP 0 951 135 B1**
(45) Veröffentlichungstag und Bekanntmachung des Hinweises auf die Patenterteilung: **10.12.2003**
(21) Anmeldenummer: 99810240.4
(22) Anmeldetag: 18.03.1999
(51) Int. Cl.: H02P 6/00

(54) **Elektrowerkzeug mit separater Stromversorgungseinheit**
Electric power tool with separated power supply
Outil électrique avec unité d'alimentation séparée

(30) Priorität: 15.04.1998 DE 19816684
(43) Veröffentlichungstag der Anmeldung: 20.10.1999
(73) Patentinhaber: HILTI Aktiengesellschaft, 9494 Schaan (LI)
(72) Erfinder: Wissmach, Walter, 80637 München (DE)
(74) Vertreter: Wildi, Roland

(56) Entgegenhaltungen:
- EP-A- 0 291 131
- EP-A- 0 371 236
- EP-A- 0 684 685
- US-A- 4 489 261

## Beschreibung

Die Erfindung betrifft ein Elektrowerkzeug mit bürstenlosem (elektronisch kommutiertem) Antriebsmotor, dessen Motorsteuerung mit einer geregelten Spannung versorgt wird und bei dem Maßnahmen zur Beseitigung von Netzrückwirkungen bzw. zur EM-Verträglichkeit getroffen sind.

Elektrowerkzeuge werden heute fast ausschließlich mit Universalmotoren ausgerüstet. Abhängig von der Anwendung werden diese über einen Schalter direkt an das Stromnetz angeschlossen oder sie werden über eine vorgeschaltete elektronische Regeleinheit gesteuert.

Universalmotoren sind im Vergleich zu bürstenlosen Motoren bei vergleichbarer Leistung verhältnismäßig groß und schwer. Allerdings zehren die für den Betrieb von bürstenlosen Motoren notwendigen elektronischen Speiseeinheiten sowohl den Volumen- als auch den Gewichtsvorteil mindestens zum Teil wieder auf. Hierbei ist zu berücksichtigen, daß zur Erfüllung einschlägiger Vorschriften hinsichtlich der Netzrückwirkungen (vergleiche beispielshalber VDE 0838 sowie EN 61000-3-2) für bürstenlose Antriebe in der Regel netzseitige Filtereinrichtungen vorzusehen sind, die die geforderte EM-Verträglichkeit sicherstellen. Diese Filter vergrößern jedoch wiederum sowohl das Gewicht als auch das Volumen des gesamten Antriebs, so daß zumindest bei höheren Leistungen ein kompakter Einbau in ein handgeführtes Elektrowerkzeug schwierig ist.

Ein weiteres Problem für den Hersteller solcher Elektrowerkzeuge ergibt sich auch daraus, daß sowohl der Motor als auch die zugehörige Elektronikeinheit an die oft von Land zu Land unterschiedliche Netzspannungen und -frequenzen angepaßt werden müssen. Dies bedeutet, daß in der Regel mehrere länderspezifische Ausführungen eines bestimmten Typs eines Elektrowerkzeugs hergestellt und auf Lager gehalten werden müssen.

Der Erfindung liegt damit die Aufgabe zugrunde, Elektrowerkzeuge der genannten Art in der Handhabung durch Volumen und Gewichtseinsparung aber auch hinsichtlich der universellen Verwendbarkeit zu verbessern.

Ein Elektrowerkzeug nach der eingangs genannten Gattung ist erfindungsgemäß in zwei getrennte über eine vorzugsweise steckbare Verbindungsleitung elektrisch miteinander zu verbindende Einheiten aufgeteilt, nämlich in eine erste Geräteeinheit, die den Antriebsmotor und die Motorsteuerung enthält und in eine Stromversorgungseinheit mit hinsichtlich Netzspannung und -frequenz länderspezifisch angepaßtem geregeltem Netzteil und Elektronikeinheit zur EMV-Anpassung.

Die Erfindung geht von dem Grundgedanken aus, daß es für ein Elektrowerkzeug mit bürstenlosem Antrieb ausreicht, nur den Motor mit den unmittelbar für dessen Ansteuerung notwendigen elektrischen Bauteilen im handgeführten Gerät selbst einzubauen. Die zur Speisung, also zur Stromversorgung, benötigten elektronischen Einheiten und Filter für die EM-Verträglichkeit werden gemäß der Erfindung in eine separate Stromversorgungseinheit "ausgelagert" und werden im Anwendungsfall über eine nahezu beliebig lange, elektrische Verbindungsleitung mit der Geräteeinheit bzw. dem Motor verbunden. Dies bringt gegenüber der herkömmlichen vollintegrierten Lösung, bei der alle Baugruppen in der handgeführten Geräteeinheit untergebracht sind, erhebliche Einsparungen beim Bauvolumen und beim Gewicht der handgeführten Geräteeinheit.

Bei geeigneter Wahl der auszulagernden Stromversorgungs- und Elektronikeinheiten kann ein Optimum hinsichtlich des zu treibenden Aufwands erzielt werden. So ist es sinnvoll, einen Teil der Elektronik, nämlich den, der unmittelbar für den Betrieb des Motors dient, in der Geräteeinheit zu belassen. Dies bringt den besonderen Vorteil, daß keine Signal- und Steuerleitungen zwischen der Geräteeinheit und der Stromversorgungseinheit erforderlich werden. Auch eine Schirmung der Verbindungsleitung zwischen den beiden Einheiten ist dann nicht notwendig, da keine höherfrequenten Anteile von Strom oder Spannung auf ihr auftreten. Besonders gering wird der Aufwand, wenn die von der Stromversorgungseinheit zur Verfügung gestellte Versorgungsspannung eine Gleichspannung ist.

Zwar sind umrichtergespeiste Antriebe unterschiedlicher Art schon bekannt, bei welchen sich in der Regel im Elektrowerkzeug nur ein Drehstrommotor befindet, während die Umrichtereinheit stationär - z.B. bei der bekannten 400 Hz-Technik - oder semistationär ausgeführt ist. Abgesehen davon jedoch, daß es sich hierbei um eine andere Antriebsart handelt, ist der Aufwand bei der Verbindungsleitung größer. So ist beispielweise in US 4,489,261 ein handgeführtes Elektrowerkzeug beschrieben, das den Ausgangspunkt für die Erfindung darstellt und bei dem die Versorgungseinheit sowie die gesamte Steuerelektronik in eine separate boxartige Geräteeinheit ausgelagert sind, so dass sich im eigentlichen Handgerät nur noch der Motor und ein EIN/AUS-Schalter befinden. Dies bedeutet, dass die Verbindungsleitung zwischen dieser separaten Versorgungseinheit und Im eigentlichen Werkzeug mehrpolig, im Regelfall sechspolig, ausgeführt werden muß. Zusätzlich sind Leitungsabschirmungen erforderlich.

Durch die Erfindung, nämlich der gemäß dem Kennzeichen des Anspruchs 1 speziellen Aufteilung der Komponenten in die eine bzw. andere Geräteeinheit mit ausgelagerter Speise- oder Stromversorgungseinheit für ein Elektrowerkzeug mit bürstenlosem Antriebsmotor ergibt sich der weitere Vorteil, daß es problemlos möglich wird, der Geräteeinheit des Elektrowerkzeugs eine von der Netzspannung und -frequenz unabhängige standardisierte Versorgungsspannung zur Verfügung zu stellen. Auf diese Weise entfällt die Notwendigkeit viele länderspezifische Gerätevarianten des Elektrowerkzeugs vorhalten zu müssen. Zwar muß die Stromversorgungseinheit selbst länderspezifisch ausgeführt werden. Es genügt jedoch, je Leistungsklasse des Elektrowerkzeugs und je Land eine Variante, an die dann als zusätzlicher Vorteil unterschiedliche Geräte angeschlossen werden können.

Die Erfindung und vorteilhafte Ausführungsbeispiele der Erfindung werden nachfolgend unter Bezug auf die Zeichnung näher beschrieben. Es zeigen:
- **Fig. 1**: in schematischer Darstellung das Grundprinzip einer erfindungsgemäßen Gerätekombination:
- **Fig. 2**: eine bevorzugte Lösung der erfindungsgemäßen Gerätekombination mit aktivem Netzfilter; und
- **Fig. 3**: eine abgewandelte Ausführungsvariante der erfindungsgemäßen Gerätekombination mit passivem Netzfilter.

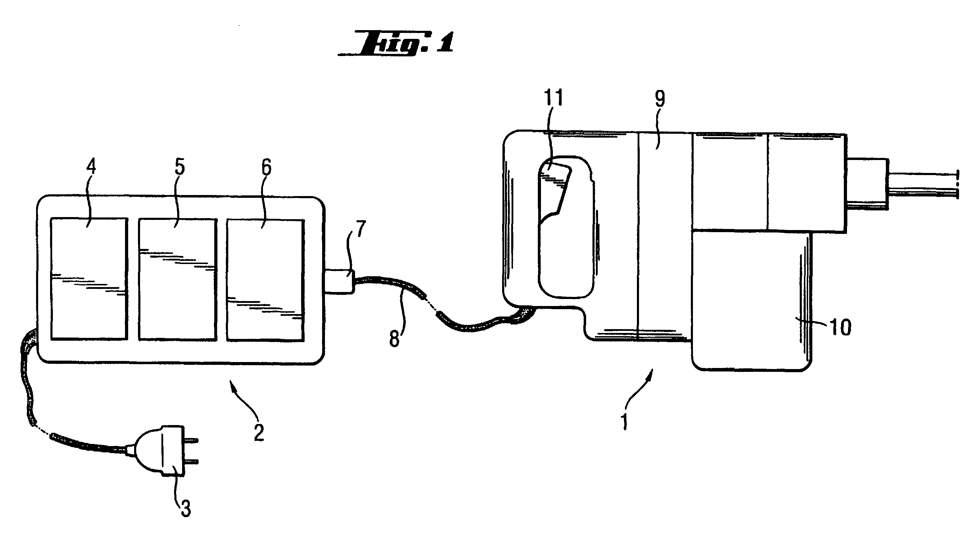

Die Figur 1 zeigt das Prinzipbild der erfindungsgemäßen Gerätekombination eines vorzugsweise handgeführten Elektrowerkzeugs 1, beispielsweise einen Bohrhammer, mit getrennter Speise- oder Stromversorgungseinheit 2, die sich über eine vorzugsweise standardisierte Steckverbindung 7 und eine Verbindungsleitung 8 mit weitgehend beliebiger Länge verbinden lassen. Die mit länderspezifischem Netzanschlußstecker 3 versehene Speiseeinheit 2 enthält als wesentliche Baugruppe ein Funkentstörfilter 4, einen Leistungsfaktorregler 5 sowie eine spannungsgeregelte Netzeinheit 6. Im handgeführten Elektrowerkzeug 1 mit bürstenlosem Motor 10 befindet sich nur noch die für den unmittelbaren Betrieb des Motors erforderliche Motorsteuerung 9 mit Wechselrichter 12 und einer eingangsseitigen Schaltereinheit 11.

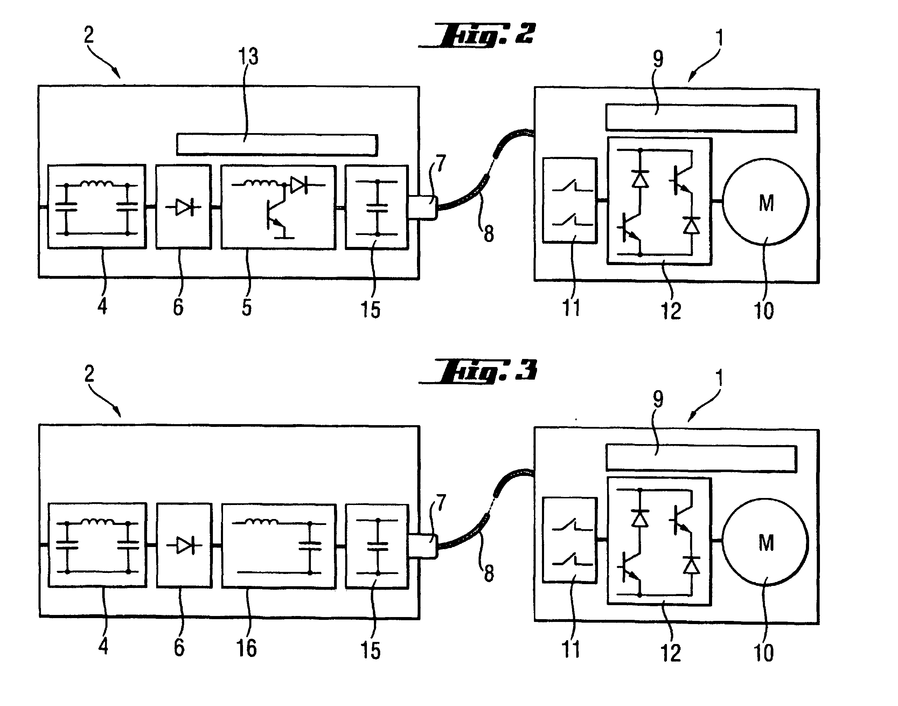

Die Fig. 2 verdeutlicht eine Ausführungsvariante der Erfindung, bei welcher der Wechselrichter 12 im Elektrowerkzeug 1, also dem Handwerkzeug, untergebracht ist, während ein Zwischenkreiskondensator 15 in der Speise- bzw. Stromversorgungseinheit 2 untergebracht ist.

Bei der Ausführungsvariante nach Fig. 3 ist der Leistungsfaktorregler 5 (mit PFC-Steuerung 13) durch ein passives Filter 16 ersetzt, das sowohl auf der Wechselstromseite, also vollständig am Netzeingang, als auch auf der Gleichstromseite, also nach dem Gleichrichter 6 angeordnet sein kann.

Für beide Ausführungsvarianten nach Fig. 2 bzw. 3 gilt, daß ein Zwischenkreiskondensator 15 ganz oder teilweise in das Elektrowerkzeug 1 verlagert sein kann. Der Netzeingang kann ein- oder mehrphasig sein. Die Darstellung der Filterschaltungen (Fig. 2: aktiv und Fig. 3 : passiv) sind lediglich schematisch und exemplarisch zu verstehen, da dem Fachmann eine Vielzahl von Schaltungskonzepten bekannt sind.

## Patentansprüche

1. Elektrowerkzeug mit bürstenlosem Antriebsmotor (10), dessen Motorsteuerung (9) mit einer geregelten Spannung versorgt wird und bei dem Maßnahmen zur Beseitigung von Netzrückwirkungen bzw. zur EM-Verträglichkeit getroffen sind, wobei das Elektrowerkzeug in zwei getrennte über eine Verbindungsleitung (7, 8) elektrisch miteinander zu verbindende Einheiten aufgeteilt ist, **dadurch gekennzeichnet, dass** die funktionsmäßige Aufteilung der beiden zu verbindenden Einheiten so getroffen ist, dass
- die eine Geräteeinheit (1) den Antriebsmotor (10) und die Motorsteuerung (9) enthält und
- die andere Geräteeinheit als Stromversorgungseinheit (2) mit hinsichtlich Netzspannung und -frequenz länderspezifisch angepasstem geregeltem Netzteil (6) und Elektronikeinheit (4, 5) zur EMV-Anpassung ausgeführt ist.

2. Elektrowerkzeug nach Anspruch 1, **dadurch gekennzeichnet, dass** die Stromversorgungseinheit (2) auf eine bestimmte Leistungsklasse der Geräteeinheit (1) angepaßt ist.

3. Elektrowerkzeug nach Anspruch 1 oder 2, **dadurch gekennzeichnet, dass** die Verbindungsleitung (7, 8) als steckbare Verbindung ausgeführt ist.

## Claims

1. Electric power tool with a brushless drive motor (10) whose motor controller (9) is supplied with a regulated voltage and in which measures for removal of mains pollution and for electromagnetic compatibility are implemented,
whereby the electric power tool is divided into two separate units electrically connected to each other via a connecting cable (7, 8), **characterised in that** the functional division of the two units to be connected is undertaken such that
- the one device unit (1) contains the drive motor (10) and the motor controller (9), and
- the other device unit is designed as a power supply unit (2) with a regulated power supply unit (6) and electronic unit (4, 5) for electromagnetic compatibility adaptation.

2. Electric power tool according to Claim 1, **characterised in that** the power supply unit (2) is adapted to a particular power rating of the device unit (1).

3. Electric power tool according to Claim 1 or 2, **characterised in that** the connecting cable (7, 8) is designed as a pluggable connection.

## Revendications

1. Outil électrique avec moteur d'entraînement sans balais (10) dont la commande de moteur (9) est alimentée par une tension régulée et dans lequel des mesures sont prises pour la suppression des rétroactions de secteur, respectivement pour la compatibilité électromagnétique, l'outil électrique étant divisé en deux modules séparés reliés électriquement entre eux par l'intermédiaire d'une ligne de liaison (7, 8), **caractérisé en ce que** la division fonctionnelle des deux modules à relier est prévue de façon que :
- l'un des modules d'appareil (1) contienne le moteur d'entraînement (10) et la commande de moteur (9),
- l'autre module d'appareil soit conformé en module d'alimentation en courant (2) avec bloc d'alimentation régulée (6) adapté aux spécifications nationales en termes de tension et de fréquence de réseau et avec module électronique (4, 5) pour l'adaptation de la compatibilité électromagnétique.

2. Outil électrique selon la revendication 1, **caractérisé en ce que** le module d'alimentation en courant (2) est adapté à une catégorie de puissance déterminée du module d'appareil (1).

3. Outil électrique selon la revendication 1 ou 2, **caractérisé en ce que** la ligne de liaison (7, 8) est conformée en liaison enfichable.
